# EUROPÄISCHE PATENTANMELDUNG

(11) **EP 3 412 412 A1**
(43) Veröffentlichungstag der Anmeldung: **12.12.2018**
(21) Anmeldenummer: 17175202.5
(22) Anmeldetag: 09.06.2017
(51) Int. Cl.: B25B 7/00, B25G 1/00, B25B 15/00, B25B 23/00

(54) **MANUELL BETÄTIGTES HANDWERKZEUG**

(71) Anmelder: Wezag GmbH Werkzeugfabrik, 35260 Stadtallendorf (DE)
(72) Erfinder: Glockseisen, Thomas, 40217 Düsseldorf (DE)
(74) Vertreter: REHBERG HÜPPE + PARTNER

(57) **Zusammenfassung**

Die Erfindung betrifft ein manuell betätigtes Handwerkzeug (2), bei dem es sich beispielsweise um eine Zange (1) handelt. Erfindungsgemäß weist das Handwerkzeug (2) eine Anzeigeeinrichtung (13) auf, über welche eine Handwerkzeug-Kennzeichnung (16) angezeigt werden kann. Die angezeigte Handwerkzeug-Kennzeichnung (16) kann elektrisch verändert werden, wobei diese auch ohne elektrische Beaufschlagung permanent angezeigt werden kann. Vorzugsweise weist die Anzeigeeinrichtung (13) zu diesem Zweck ein sogenanntes "elektronisches Papier" auf.

## Beschreibung

### TECHNISCHES GEBIET DER ERFINDUNG

Die Erfindung betrifft ein manuell betätigtes Handwerkzeug, bei welchem eine von dem Handwerkzeug auf ein Werkstück aufgebrachte Werkzeugkraft nicht mittels einer Fremdkraft (beispielsweise eines elektrischen Antriebs, eines hydraulischen Antriebs oder eines pneumatischen Antriebs) erzeugt wird, sondern vielmehr die Werkzeugkraft von einem Benutzer manuell erzeugt wird. Beispielsweise handelt es sich bei dem manuell betätigten Handwerkzeug um einen Schraubendreher oder eine Zange (insbesondere eine Abisolierzange, eine Crimpzange, eine Presszange, eine Rohrpresszange, eine Presszange für Fittinge oder eine Schneidzange).

### STAND DER TECHNIK

Bei manuell betätigten Handwerkzeugen kann eine Kennzeichnung des Handwerkzeugs mit einer Handwerkzeug-Kennzeichnung wünschenswert sein. Um lediglich einige nicht beschränkende Beispiele zu nennen, kann eine individuelle Handwerkzeug-Kennzeichnung des Handwerkzeugs der Name des Benutzers oder des Besitzers des Handwerkzeugs sein, um eine Zuordnung des Handwerkzeugs zu diesem Benutzer oder Besitzer zu ermöglichen oder vereinfachen. Möglich ist auch der Einsatz einer individuellen Handwerkzeug-Kennzeichnung in Form einer Ziffernfolge oder einer Nummer, um beispielsweise eine Dokumentation des derart individualisierten Handwerkzeugs hinsichtlich des Kaufdatums, der gekauften Charge, der Einsätze des Handwerkzeugs, der Einsatzhäufigkeit des Handwerkzeugs und der Betriebsdauer des Handwerkzeugs zu ermöglichen. Möglich ist des Weiteren, dass mehrere Handwerkzeuge mit einer gleichen Handwerkzeug-Kennzeichnung ausgestattet sind, welche beispielsweise auf das Herstellungsunternehmen des Handwerkzeugs oder aber das Unternehmen des gewerblichen Abnehmers, in welchem das Handwerkzeug eingesetzt wird, hinweist. Auch möglich ist, dass eine Handwerkzeug-Kennzeichnung einen Typ des Handwerkzeugs, eine Ausstattung des Handwerkzeugs o.Ä. angibt.

Handwerkzeug-Kennzeichnungen werden üblicherweise in Form von Plaketten oder Labeln an dem Handwerkzeug vorgesehen. Möglich ist auch, dass eine Handwerkzeug-Kennzeichnung durch eine farbige Gestaltung einer Außenfläche des Handwerkzeugs erfolgt, wobei diese Außenfläche bedruckt werden kann oder auch ein elastomerer Griff des Handwerkzeugs in einem mehrstufigen Spritzgießverfahren erfolgen kann (vgl. DE 697 30 318 T2). Schließlich erfolgt auch eine individuelle Kennzeichnung der Handwerkzeuge insbesondere durch Handwerker, indem gezielt die Mantelfläche des Handwerkzeugs mit einer Kerbe, Einritzung oder Beschriftung ausgestattet wird.

### AUFGABE DER ERFINDUNG

Der Erfindung liegt die Aufgabe zugrunde, ein manuell betätigtes Handwerkzeug vorzuschlagen, welches hinsichtlich der Bereitstellung einer Handwerkzeug-Kennzeichnung verbessert ist.

### LÖSUNG

Die Aufgabe der Erfindung wird erfindungsgemäß mit den Merkmalen des unabhängigen Patentanspruchs gelöst. Weitere bevorzugte erfindungsgemäße Ausgestaltungen sind den abhängigen Patentansprüchen zu entnehmen.

### BESCHREIBUNG DER ERFINDUNG

Die Erfindung schlägt vor, dass das manuell betätige Handwerkzeug mit einer Anzeigeeinrichtung ausgestattet wird. Die Anzeigeeinrichtung erzeugt nicht eine permanente Handwerkzeug-Kennzeichnung, wie dies für die eingangs genannte Einritzung, Beschriftung, das Herstellen einer Handwerkzeug-Kennzeichnung in einem mehrstufigen Spritzgießverfahren, dem Etikett u.Ä. der Fall ist. Vielmehr ist die mit der verbindungsgemäß eingesetzten Anzeigeeinrichtung anzeigbare Handwerkzeug-Kennzeichnung veränderbar. Eine derartige Veränderung der Handwerkzeug-Kennzeichnung kann beispielsweise herstellerseitig genutzt werden, um das Handwerkzeug mit einer Marke des Herstellers, einer Kennzeichnung des Typs oder der Ausstattung oder bereits mit einer seitens des Kunden gewünschten Handwerkzeug-Kennzeichnung auszustatten. Möglich ist aber auch, dass eine Veränderung der Anzeige der Anzeigeeinrichtung durch den Abnehmer oder Nutzer oder Handwerker herbeigeführt wird, beispielsweise um das Handwerkzeug mit einer Handwerkzeug-Kennzeichnung in Form einer laufenden Nummer, eines Namens des Benutzers u. ä. auszustatten.

Erfindungsgemäß kann die Veränderung der Anzeige besonders einfach herbeigeführt werden, da erfindungsgemäß eine Anzeigeeinrichtung eingesetzt wird, welche elektrisch veränderbar ist.

Erfindungsgemäß wird hierbei nicht eine beliebige elektrisch veränderbare Anzeigeeinrichtung eingesetzt, bei welcher es sich beispielsweise um eine mit Leuchten oder Dioden oder einem klassischen Bildschirm gebildete Anzeigeeinrichtung handelt. Grund hierfür ist, dass die Erfindung erkannt hat, dass derartige aufwendige Anzeigeeinrichtungen für ein manuell betätigtes Handwerkzeug insbesondere infolge der im Betrieb wirkenden mechanischen Beaufschlagungen, infolge der Kosten und infolge einer permanent erforderlichen Energieversorgung für den Betrieb der Anzeigeeinrichtung nicht geeignet sind. Vielmehr schlägt die Erfindung vor, dass eine Anzeigeeinrichtung für das Handwerkzeug eingesetzt wird, welche trotz der Möglichkeiten der elektrischen Veränderung der Handwerkzeug-Kennzeichnung dauerhaft diese Handwerkzeug-Kennzeichnung anzeigen kann, ohne dass jedwede elektrische Beaufschlagung der Anzeigeeinrichtung erforderlich ist. Eine derartige Anzeige ohne elektrische Beaufschlagung soll dauerhaft möglich sein, worunter verstanden wird, dass ohne Einsatz jedweder Energiequelle die Handwerkzeug-Kennzeichnung zumindest über Tage, Woche, Monaten oder Jahre angezeigt wird.

Im Rahmen der Erfindung kann als Anzeigeeinrichtung insbesondere eine Technologie Einsatz finden, welche auch als "elektronisches Papier", "E-Papier", "E-Paper", "ePaper" oder auch "E-Ink" bezeichnet wird, und/oder eine Anzeigeeinrichtung, welche auf Basis einer Elektrophorese eine Anzeige der Handwerkzeug-Kennzeichnung erzeugt. Um ein nicht beschränkendes Beispiel zu nennen, können hierbei Mikrokapseln, insbesondere mit einem mittleren Durchmesser im Bereich von 40 um verwendet werden, die positiv geladene weiße Partikel und negativ geladene schwarze Partikel in einem transparenten zähflüssigen Polymer enthalten. Ein kurzzeitiges Anlegen einer elektrischen Spannung kann an einer Sichtfläche eine gezielte Ausrichtung der weißen und schwarzen Partikel herbeiführen, die dann auch ohne elektrische Spannung zumindest über Wochen stabil bleibt. Als Trägermaterial kann beispielsweise flexibler Kunststoff oder Glas Einsatz finden. Eine Ansteuerung von Bildpunkten kann mittels Segmentanzeigen mittels passiver transparenter Elektroden oder bei Matrixdisplays über eine TFT-Aktiv-Matrix erfolgen. Möglich ist auch die Darstellung von Graustufen über eine Steuerung des zeitlichen Verlaufs der angelegten Spannung oder die Verwendung von farbigen, auf Elektrophorese basierenden Anzeigeeinrichtungen. Auf Elektrophorese basierende elektronische Papiere werden beispielsweise von den Unternehmen E Ink Corporation, Sipix, Plastic Logic, Goangzhou OED Technologies, Bridgestone, Philips hergestellt. Möglich ist auch der Einsatz eines elektronischen Papiers auf Basis von bistabilen LCDs, eines auf einer Elektrobenetzung oder eines so genannten "Electrowetting" basierenden elektronischen Papiers, bei dem eine gefärbte Öl- und eine Wasserschicht übereinander liegen und die Lichtdurchlässigkeit einzelner Bildpunkte dabei dadurch beeinflusst wird, dass die Oberflächenspannung mittels angelegter elektrischer Spannung verändert wird, oder elektronischer Papiere, welche auf einer mikromechanisch gesteuerten Interferenz-Modulation basieren. Im Rahmen der Erfindung findet erstmalig die an sich bekannte Technologie eines elektronischen Papiers Einsatz für ein insbesondere passives, manuell betätigtes Handwerkzeug. Hiermit erfolgt im Rahmen der Erfindung auch die Übertragung dieser Technologie von mittels Fremdenergie betätigten Maschinenwerkzeugen (beispielsweise gemäß den Druckschriften DE 10 2013 216 678 A1, DE 2013 217 911 A1, DE 10 2014 201 435 A1, DE 10 2014 201 436 A1, DE 20 2015 005 519 U1, US 2014/0166324 A1, US 2016/0223312 A1, US 2016/0318165 A1, DE 10 2004 050 240 B4), bei welchen ohnehin eine "Elektrifizierung" vorhanden ist und über ein elektrisches Papier eine Anzeige von Messgrößen, eines Maschinenzustands oder eines Ladezustands eines Akkumulators, eine Anzeige von Betriebsparametern erfolgt, auf den Technologiebereich eines passiven, insbesondere nicht "elektrifizierten" manuell betätigten Handwerkzeugs.

Grundsätzlich kann eine beliebige Handwerkzeug-Kennzeichnung durch die Anzeigeeinrichtung angezeigt werden. Um lediglich einige nicht beschränkte Beispiele zu nennen, kann es sich um eine Buchstaben-, Zahlen- oder Ziffernfolge handeln oder ein angezeigtes Symbol, eine farbige Fläche o.Ä. Vorzugsweise ist die über die Anzeigeeinrichtung angezeigte Handwerkzeug-Kennzeichnung ein Benutzername und/oder eine das Handwerkzeug individualisierende Ziffernfolge.

Die Anzeigeeinrichtung kann an jeder beliebigen Stelle der nach außen sichtbaren Fläche des Handwerkzeugs oder auch in einem beispielsweise mittels einer Klappe, einem Deckel oder einem Schieber abgedeckten Innenraum des Handwerkzeugs angeordnet sein. Möglich ist auch, dass die Anzeigeeinrichtung an einem kraftführenden Bauelement im Kraftfluss zwischen einer manuellen Betätigungsfläche des Handwerkzeugs und einer Arbeitsfläche des Handwerkzeugs, welches mit dem Werkstück, das mit dem Handwerkzeug bearbeitet wird, in Wechselwirkung tritt, vorgesehen ist. Für einen besonderen Vorschlag der Erfindung ist die Anzeigeeinrichtung im Bereich einer manuellen Betätigungsfläche des Handwerkzeugs angeordnet. Beispielsweise kann eine manuelle Betätigungsfläche des Handwerkzeugs von einem elastomeren Griff gebildet sein, im Bereich dessen dann die Anzeigeeinrichtung angeordnet sein kann. Beispielsweise kann die Anzeigeeinrichtung von einem Kunststoffmaterial eines Griffes des Handwerkzeugs umspritzt sein oder in dieses eingebettet sein.

Die Erfindung kann Verwendung finden für beliebige manuell betätigte Handwerkzeuge. Für eine Ausgestaltung der Erfindung ist das Handwerkzeug ein Schraubendreher, wobei in diesem Fall die Anzeigeeinrichtung vorzugsweise im Bereich des Griffes des Schraubendrehers angeordnet ist, was im Bereich der Mantelfläche des Griffes der Fall sein kann oder auch im Bereich der der Klinge des Schraubendrehers abgewandten Stirnfläche des Griffes.

Für einen anderen Vorschlag der Erfindung handelt es sich bei dem Handwerkzeug um eine Zange, insbesondere eine Abisolierzange, eine Crimpzange, eine Presszange, eine Rohrpresszange, eine Presszange für Fittinge oder eine Schneidzange. Eine derartige Zange verfügt über zwei relativ zueinander verschwenkbare Handhebel, an welchen der Benutzer die Betätigungskräfte erzeugt, die dann bspw. über eine Antriebskinematik (ggf. unter Unter- oder Übersetzung) an Zangenbacken übertragen werden können.

Für die Ausgestaltung des Handwerkszeugs als Zange kann die Anzeigeeinrichtung beispielsweise im Bereich eines Handhebels angeordnet werden. Ebenfalls möglich ist, dass die Anzeigeeinrichtung im Bereich eines Zangenkopfes der Zange angeordnet ist. Hierbei kann sich die Anzeige der Anzeigeeinrichtung in der Zangenkopfebene erstrecken, wobei in diesem Fall beispielsweise die Anzeigeeinrichtung von einer Deckplatte der Zange im Bereich des Zangenkopfes getragen sein kann. Möglich ist aber auch, dass sich eine Anzeigeebene der Anzeigeeinrichtung derart erstreckt, dass eine Flächennormale der Anzeigeebene in der Zangenkopfebene liegt. Möglich ist in einem derartigen Fall, dass die Anzeigeeinrichtung im Bereich der Stirnseiten von Deckplatten des Zangenkopfes angeordnet ist, wobei die Anzeigeeinrichtung auch zumindest teilweise in einen Zwischenraum zwischen den beiden Deckplatten integriert sein kann. Für den Fall, dass die Anzeigeeinrichtung im Bereich eines Handhebels angeordnet ist und die Handhebel in einer Schwenkebene relativ zueinander verschwenkt werden, kann die Anzeigeebene beispielsweise parallel zur Schwenkebene orientiert sein. Liegt dann die Zange mit den Handhebeln auf einer Unterlage, ist die Anzeigeebene der Anzeigeeinrichtung frei sichtbar, so dass die Handwerkzeug-Kennzeichnung ebenfalls gut sichtbar ist. Möglich ist aber auch, dass die Anzeigeeinrichtung an einer Seite eines Handhebels angeordnet ist, welcher dem anderen Handhebel zugewandt oder von diesem abgewandt ist. Möglich ist, dass sich in diesem Fall eine Flächennormale der Anzeigeebene der Anzeigeeinrichtung parallel zur Schwenkebene der Handhebel erstreckt.

Unter Umständen sind/ist für den Betrieb der Anzeigeeinrichtung und insbesondere die elektrische Veränderung der Anzeige derselben eine Steuereinheit, ein elektrisches Kabel und/oder ein Anschluss erforderlich. Während grundsätzlich möglich ist, dass diese elektrischen Bauelemente an beliebiger Stelle des Handwerkzeugs angeordnet sind, schlägt eine Ausgestaltung der Erfindung vor, dass die Steuereinheit, das elektrische Kabel und/oder der Anschluss in einen Handhebel integriert sind/ist. Um lediglich ein nicht beschränkendes Beispiel zu nennen, kann ein Anschluss (insbesondere ein USB-Anschluss) in die Stirnseite des Handhebels, welche dem Zangenkopf abgewandt ist, integriert sein. Dieser Anschluss kann dann über ein elektrisches Kabel mit einer in das Innere des Handhebels integrierten Steuereinheit und dann mit der Anzeigeeinrichtung verbunden sein. Soll dann eine Erzeugung oder Veränderung der Anzeige der Anzeigeeinrichtung erfolgen, kann an den Anschluss eine externe Einrichtung angeschlossen werden, über welche dann eine elektrische Leistungsversorgung der Steuereinheit und der Anzeigeeinrichtung erfolgt, um die Anzeige zu erzeugen oder zu verändern, und/oder über den Anschluss wird ein Steuersignal übertragen, welches die zu erstellende oder eine neue veränderte Handwerkzeug-Kennzeichnung beinhaltet.

Für einen besonderen Vorschlag verfügt der Handhebel über zwei metallische Streben, insbesondere Tragschenkel, welche beispielsweise von einem sich in Längsrichtung des Handhebels erstreckenden U-Profil ausgebildet werden oder von zwei auf Abstand gehaltenen Platten ausgebildet werden, welche sich ebenfalls in Längsrichtung des Handhebels erstrecken. In diesem Fall können/kann die Steuereinheit, das elektrische Kabel und/oder der Anschluss zwischen den zwei metallischen Streben des Handhebels angeordnet sein, womit ein Schutz dieser unter Umständen empfindlichen elektrischen Bauelemente durch die metallischen Tragschenkel des Handhebels erfolgen kann. Möglich ist hierbei auch, dass die Streben einen Kanal, einer Ausnehmung oder eine Bohrung ausbilden, durch welche ein elektrisches Kabel von einem Innenraum der beiden Tragschenkel nach außen (oder umgekehrt) geführt ist, beispielsweise zu dem Anschluss und/oder der Anzeigeeinrichtung. Möglich ist, dass die beiden metallischen Streben der Übertragung der Betätigungskraft dienen und die Streben mit einem elastomeren Kunststoffmaterial zur Ausbildung eines Griffes des Handhebels ummantelt sind.

Grundsätzlich kann die konstruktive Ausgestaltung und das eingesetzte technologische Prinzip zur Erzeugung der Anzeige der Anzeigeeinrichtung beliebig sein, wobei die konstruktive Ausgestaltung den in dem Handwerkzeug auf diese wirkenden mechanischen Beanspruchungen Rechnung trägt. Für einen Vorschlag der Erfindung weist die Anzeigeeinrichtung eine Abdeckung auf. Über die Abdeckung ist die Anzeigeeinrichtung gegenüber mechanischen Beanspruchungen geschützt, wobei alternativ oder zusätzlich auch eine Abdichtung der Anzeigeeinrichtung erfolgen kann.

Das Handwerkzeug verfügt vorzugsweise über keine permanente Energieversorgung. Um dennoch eine Veränderung der Anzeige der Anzeigeeinrichtung zu ermöglichen, ist somit eine externe Energieversorgung erforderlich. Des weiteren erfolgt verzugsweise eine Auswahl oder Eingabe einer an der Anzeigeeinrichtung anzuzeigenden Handwerkzeug-Kennzeichnung nicht über ein Auswahl- oder Eingabefeld an dem Handwerkzeug selbst. Um dennoch die Energieversorgung und eine Eingabe zu ermöglichen, schlägt die Erfindung in einer Ausgestaltung vor, dass das Handwerkzeug eine drahtlose Empfangseinrichtung aufweist, über welche eine externe Energieversorgung und/oder die Übermittlung eines Steuersignals zur Erzeugung oder Veränderung einer Anzeige der Anzeigeeinrichtung erfolgen kann. Beispielsweise kann es sich bei der drahtlosen Empfangseinrichtung um eine RFID-Empfangseinrichtung handeln, in welcher über eine externe Anregungsfrequenz eine elektrische Leistungsversorgung erfolgen kann und auch der Empfang eines Steuersignals möglich ist.

Für einen anderen Vorschlag der Erfindung verfügt das Handwerkzeug über eine Schnittstelle, insbesondere einen Anschluss oder einen Stecker. Über die Schnittstelle ist eine kabelgebundene externe Energieversorgung möglich und/oder die Übertragung eines kabelgebundenen Steuersignals zur Erzeugung oder Veränderung einer Anzeige der Anzeigeeinrichtung möglich.

Vorteilhafte Weiterbildungen der Erfindung ergeben sich aus den Patentansprüchen, der Beschreibung und den Zeichnungen. Die in der Beschreibung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen. Ohne dass hierdurch der Gegenstand der beigefügten Patentansprüche verändert wird, gilt hinsichtlich des Offenbarungsgehalts der ursprünglichen Anmeldungsunterlagen und des Patents Folgendes: weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen.

Die in den Patentansprüchen und der Beschreibung genannten Merkmale sind bezüglich ihrer Anzahl so zu verstehen, dass genau diese Anzahl oder eine größere Anzahl als die genannte Anzahl vorhanden ist, ohne dass es einer expliziten Verwendung des Adverbs "mindestens" bedarf. Wenn also beispielsweise von einer Anzeigeeinrichtung die Rede ist, ist dies so zu verstehen, dass genau eine Anzeigeeinrichtung, zwei Anzeigeeinrichtungen oder mehr Anzeigeeinrichtungen vorhanden sind. Diese Merkmale können durch andere Merkmale ergänzt werden oder die einzigen Merkmale sein, aus denen das jeweilige Erzeugnis besteht.

Die in den Patentansprüchen enthaltenen Bezugszeichen stellen keine Beschränkung des Umfangs der durch die Patentansprüche geschützten Gegenstände dar. Sie dienen lediglich dem Zweck, die Patentansprüche leichter verständlich zu machen.

### KURZBESCHREIBUNG DER FIGUREN

Im Folgenden wird die Erfindung anhand in den Figuren dargestellter bevorzugter Ausführungsbeispiele weiter erläutert und beschrieben.
- **Fig. 1**: zeigt in einer räumlichen Ansicht ein als Zange ausgebildetes manuell betätigtes Handwerkzeug.
- **Fig. 2**: zeigt in einem Längsschnitt einen Handhebel der Zange gemäß Fig. 1.
- **Fig. 3**: zeigt in räumlicher, teilgeschnittener Darstellung den Handgriff gemäß Fig. 2.
- **Fig. 4 bis 7**: zeigen weitere Ausgestaltungen von als Zange ausgebildeten Handwerkzeugen mit unterschiedlichen Orten der Anordnung einer Anzeigeeinrichtung.
- **Fig. 8**: zeigt in einer räumlichen Darstellung ein Handwerkzeug, welches als Rohrpresszange oder Zange zum Verpressen von Fittingen ausgebildet ist.
- **Fig. 9**: zeigt ein Detail IX des Handwerkzeugs gemäß Fig. 8.
- **Fig. 10**: zeigt in räumlicher Darstellung ein als Schneidzange ausgebildetes Hand-werkzeug.
- **Fig. 11**: zeigt ein Detail XI der Schneidzange gemäß Fig. 10.
- **Fig. 12**: zeigt in räumlicher Darstellung ein als Schraubendreher ausgebildetes Hand-werkzeug.

### FIGURENBESCHREIBUNG

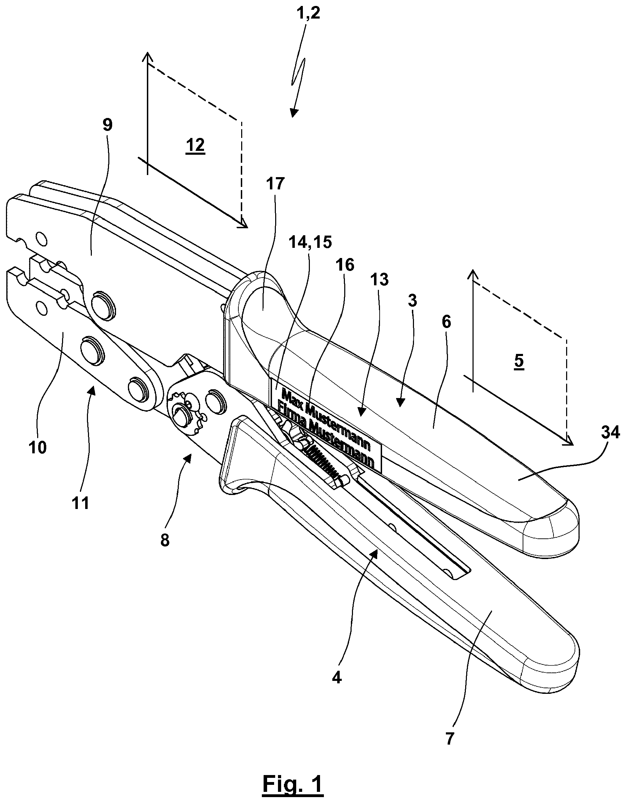

**Fig.** 1 zeigt ein als Zange 1 ausgebildetes Handwerkzeug 2. Die Zange 1 ist hier als Crimpzange ausgebildet und beispielsweise grundsätzlich entsprechend den Druckschriften DE 197 53 436 C2, DE 198 02 287 C1 oder EP 2 305 428 A1 der Anmelderin oder aktuellen Produkten mit der Kennzeichnung "CK 100" der Anmelderin ausgebildet, so dass hinsichtlich der konstruktiven Gestaltungen grundsätzlich auf diese Druckschriften und Produkte verwiesen wird.

Die Zange 1 verfügt über zwei Handhebel 3, 4. Die Handhebel 3, 4 sind in einer Schwenkebene 5 relativ zueinander verschwenkbar. Die Verschwenkung erfolgt durch Aufbringung manueller Betätigungskräfte durch den Benutzer auf Betätigungsflächen 34 von Griffen 6, 7 der Handhebel 3, 4. Die Bewegung der Handhebel 3, 4 und auf diese applizierte manuelle Betätigungskräfte werden über eine Antriebskinematik 8, insbesondere mit einem Kniehebeltrieb, unter geeigneter Über- oder Untersetzung übertragen an Zangenbacken 9, 10. Die Zangenbacken 9, 10 bilden Gesenke aus oder tragen Gesenke (hier nicht dargestellt), zwischen welchen ein zu bearbeitendes Werkstück verpresst wird (beispielsweise ein Stecker mit einem Leiter vercrimpt wird). Die Zangenbacken 9, 10 sind Bereich eines Zangenkopfes 11 angeordnet. Eine Verschwenkung der Zangenbacken 9, 10 erfolgt in einer Zangenkopfebene 12 oder parallel zu dieser. Die Schwenkebene 5 der Handhebel 3, 4 und die Zangenkopfebene 12 sind parallel zueinander angeordnet oder stimmen überein. In den Griff 6 des Handhebels 3 ist eine Anzeigeeinrichtung 13 eingebettet. Eine Anzeige 14, welche eine hier ebene Anzeigefläche 15 aufweist, zeigt eine Handwerkzeug-Kennzeichnung 16 an. Die Anzeigefläche 15 kann aber in einer abgewandelten Ausführungsform durchaus gekrümmt sein und bspw. der Kontur des Griffes 6 folgen. Für das dargestellte Ausführungsbeispiel besteht die Handwerkzeug-Kennzeichnung 16 aus dem Schriftzug "Max Mustermann, Firma Mustermann". Gemäß Fig. 1 ist einer Flächennormale der Anzeigefläche 15 vertikal zur Schwenkebene 5 orientiert. Die Anzeigefläche 15 ist somit an einer Seitenfläche des Griffs 6 des Handhebels 3 angeordnet. Die Anzeigefläche 15 befindet sich in der vorderen, dem Zangenkopf 11 zugewandten Hälfte des Griffes 6, wobei sich die Anzeigefläche 15 hinter einer Verdickung 17 des Griffes 6 befindet.

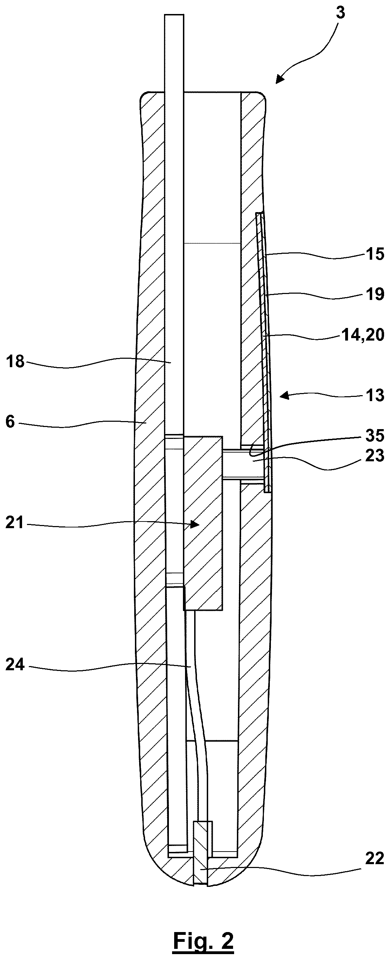

**Fig. 2** zeigt einen Längsschnitt durch den Handhebel 3. Der Handhebel 3 verfügt über zwei plattenförmige Streben 18, welche in dem Handhebel 3 beabstandet voneinander angeordnet sind. In Fig. 2 ist lediglich eine Strebe 18 dargestellt. Außenliegend sind die Streben 18 eingebettet in ein elastomeres Kunststoffmaterial des Griffes 6.

Für das hier dargestellte Ausführungsbeispiel verfügt die Anzeigeeinrichtung 13 über eine Abdeckung 19, eine Anzeige 14 in Form eines elektronischen Papiers 20, eine Steuereinheit 21 und einen Anschluss 22 (hier ein USB-Anschluss). Die Steuereinheit 21 ist über ein elektrisches Kabel 23 (vorzugsweise durch eine Ausnehmung oder Bohrung 35 der Strebe 18 hindurch) mit dem elektronischen Papier 20 verbunden sowie über ein weiteres elektrisches Kabel 24 mit dem Anschluss 22 verbunden. Für eine Erzeugung oder Veränderung einer Anzeige des elektronischen Papiers 20 erfolgt eine kabelgebundene Verbindung des Anschlusses 22 mit einer externen Einrichtung. Über die externe Einrichtung und den Anschluss 22 erfolgt dann einerseits die elektrische Leistungsversorgung der Steuereinheit 21 und des elektronischen Papiers 20 für die Erzeugung oder Veränderung der Anzeige des elektronischen Papiers 20. Andererseits erfolgt über die externe Einrichtung und den Anschluss 22 die Bereitstellung eines Steuersignals, welches die Informationen zur gewünschten anzuzeigenden Handwerkzeug-Kennzeichnung beinhaltet.

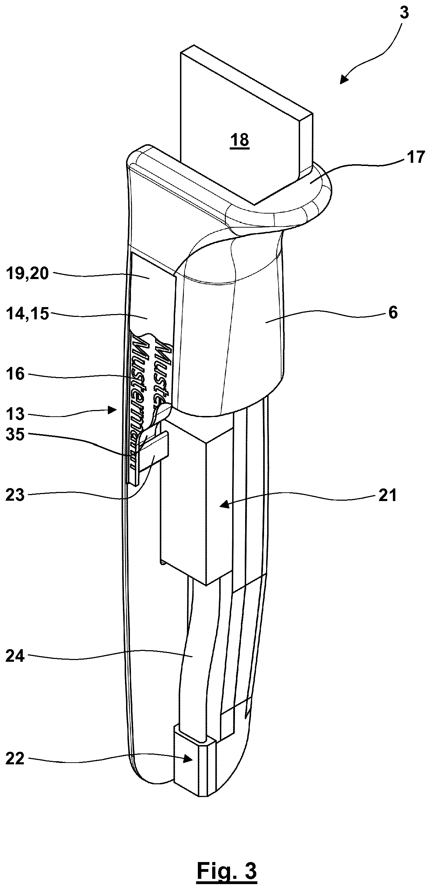

Der Anschluss 22 kann in das Kunststoffmaterial des Griffes 6 eingebettet sein, wobei auch der Anschluss 22 von dem Kunststoffmaterial umspritzt sein kann. Ebenfalls möglich ist, dass der Anschluss 22 an einer Strebe 18 befestigt ist. Das Kabel 24 verläuft zwischen den beiden Streben 18 in Richtung der Längsachse des Handhebels 3. Die Steuereinheit 21 ist an der Strebe 18 befestigt. Das elektronische Papier 20 und die Abdeckung 19 sind ebenfalls in die Außenfläche des Griffes 6 eingebettet. Möglich ist, dass die Abdeckung lösbar mit dem Griff 6 (und mit dem elektronischen Papier 20) verbunden ist, beispielsweise durch Einklipsen in den Griff 6, Verschrauben mit dem Griff 6 oder anderweitige Verbindung. Möglich ist aber auch, dass die Abdeckung 19 fest mit dem Griff 6 verbunden ist, wobei vorzugsweise die Abdeckung eine Abdichtung auch bei Einsatz der Zange 1 in feuchter Umgebung gewährleistet und die Abdeckung 19 auch das darunter angeordnete elektronische Papier 20 gegenüber mechanischen Beeinträchtigungen schützt. Das Kabel 23 erstreckt sich vorzugsweise quer zur Längsachse des Handhebels 3 zwischen der Steuereinheit 21 und dem elektronischen Papier 20 durch die Ausnehmung 35. Dies ist auch in der räumlichen Darstellung gemäß **Fig. 3** zu erkennen.

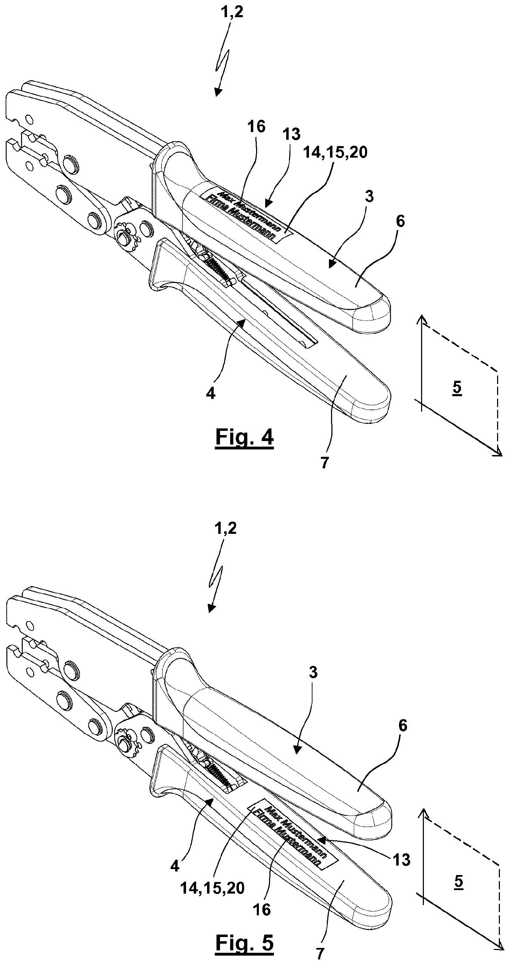

**Fig. 4** zeigt eine Ausführungsform der Zange 1, bei welcher die Anzeigefläche 15 der Anzeigeeinrichtung 13 eine Flächennormale besitzt, welche in der Schwenkebene 5 angeordnet ist und vertikal zur Längsachse des Handhebels 3 orientiert ist. Die Anzeigeeinrichtung 13 befindet sich mit ihrer Anzeigefläche 15 somit auf der äußeren, dem Handhebel 4 abgewandten Seite des Handhebels 3. Auch hier ist die Anzeigeeinrichtung 13 in den Griff 6 eingebettet.

**Fig. 5** zeigt ein Ausführungsbeispiel einer Zange 1, bei welcher die Flächennormale der Anzeigefläche 15 der Anzeigeeinrichtung 13 ebenfalls in der Schwenkebene 5 angeordnet ist und vertikal zur Längserstreckung des Handhebels 4 angeordnet ist. Hier befindet sich die Anzeigefläche 15 mit der Anzeigeeinrichtung 13 aber auf der dem Handhebel 3 zugewandten, inneren Seite des Handhebels 4. Ein Vergleich der Fig. 4 und 5 zeigt, dass eine Anordnung der Anzeigeeinrichtung 13 mit der Anzeigefläche 15 bei einer beliebigen Längserstreckung eines Handhebel 3, 4 erfolgen kann.

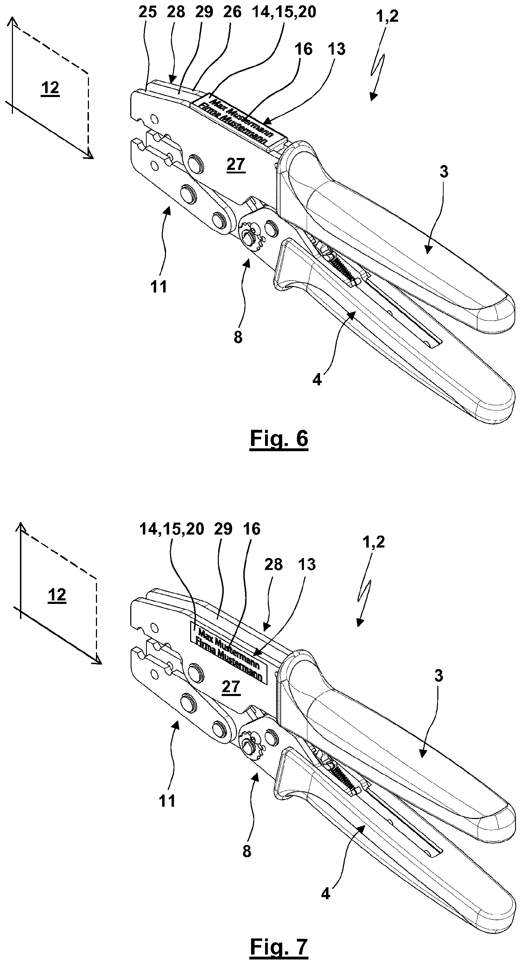

**Fig. 6 und 7** zeigen Ausführungsbeispiele einer Zange 1, bei welchen die Anzeigeeinrichtung 13 nicht im Bereich der Handhebel 3, 4 angeordnet ist. Vielmehr ist hier die Anzeigeeinrichtung 13 im Bereich des Zangenkopfes 11 angeordnet. Für das Ausführungsbeispiel gemäß Fig. 6 befindet sich die Anzeigeeinrichtung 13 mit ihrer Anzeigefläche 15 auf einer Oberseite der Zange 1, wobei die Flächennormale der Anzeigefläche 15 in der Zangenkopfebene 12 verläuft und vertikal zu einer Längsachse der Zange 2 orientiert ist. Die Anzeigeeinrichtung 13 ist hierbei an Stirnseiten 25, 26 von Deckplatten 27, 28 abgestützt, wobei sich die Anzeigeeinrichtung 13 auch in einen zwischen den Deckplatten 27, 28 ausgebildeten Zwischenraum 29 erstrecken kann.

Für das Ausführungsbeispiel gemäß Fig. 7 erstreckt sich die Flächennormale der Anzeigefläche 15 vertikal zur Zangenkopfebene 12. Die Anzeigefläche 15 befindet sich hier an der Außenfläche der Deckplatte 27. Für die dargestellten Ausführungsbeispiele ist mit den Deckplatten 27, 28 eine hier fest stehende Zangenbacke 9 gebildet. Hierbei handelt es sich um eine ruhende Zangenbacke 9, welche als starres Bauelement mit dem Handhebel 3 ausgebildet ist. Hierbei können die Deckplatten 27, 28 integral mit den beiden Streben 18 ausgebildet sein.

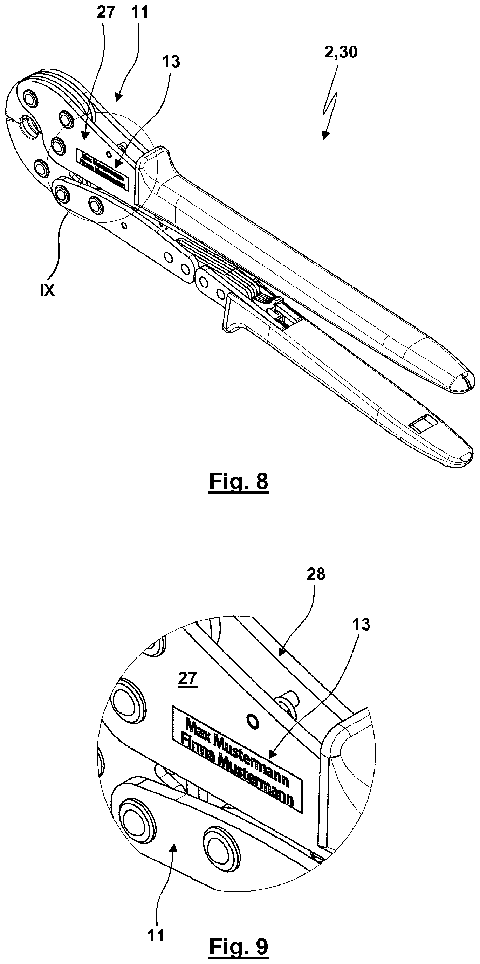

Für das Ausführungsbeispiel gemäß **Fig. 8 und 9** ist das Handwerkzeug 2 als Presszange 30 für ein Verpressen von Rohren oder Fittingen ausgebildet. Auch hier ist die Anzeigeeinrichtung 13 im Bereich eines Zangenkopfes 11, hier im Bereich einer Deckplatte 27, angeordnet. Hinsichtlich der Möglichkeiten für eine konstruktive Ausgestaltung einer derartigen Presszange 30 wird beispielhaft auf die Druckschriften DE 199 24 086 C2, DE 199 24 087 C2, DE 199 63 097 C1, DE 199 63 097 C1, DE 103 46 241 B3, DE 10 2007 001 235 B4, EP 2 995 424 A1 verwiesen.

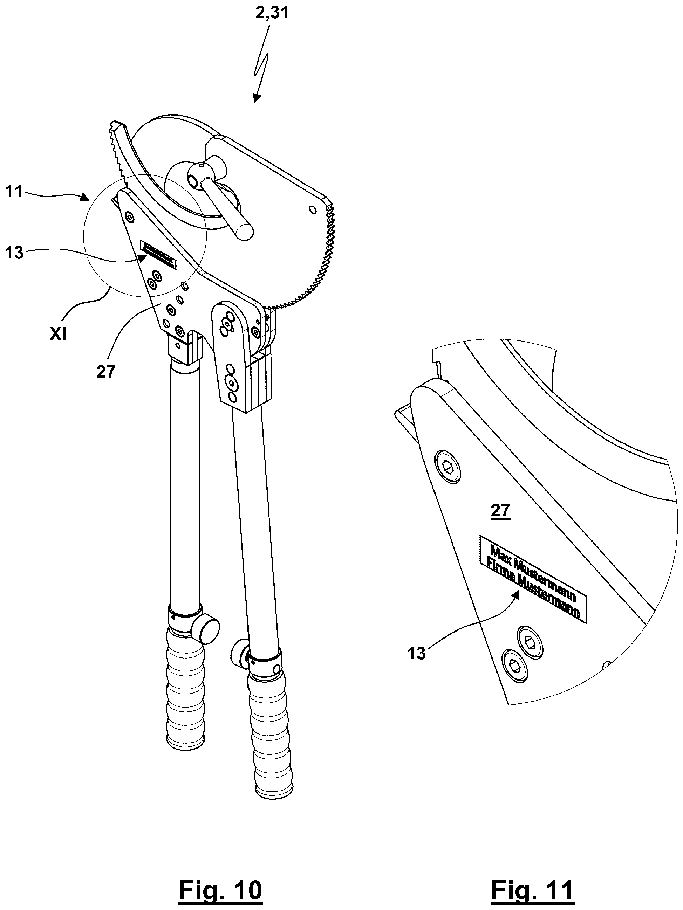

Gemäß **Fig. 10 und 11** ist das Handwerkzeug 2 als Schneidzange 31 ausgebildet, welche insbesondere für das Schneiden von Kabeln mit großen Durchmessern oder anderen strangartigen Werkstücken bestimmt ist. Auch hier ist die Anzeigeeinrichtung 13 im Bereich eines Zangenkopfes 11 angeordnet, was hier ebenfalls im Bereich einer Deckplatte 27 erfolgt. Hinsichtlich des konstruktiven Aufbaus einer Schneidzange 31 wird insbesondere auf die Druckschriften DE 43 031 180 C1, EP 3 159 088 A1, EP 3 159 107 A1, der Anmelderin oder aktuelle Produkte mit der Kennzeichnung "Kabelschneider SH" bewiesen.

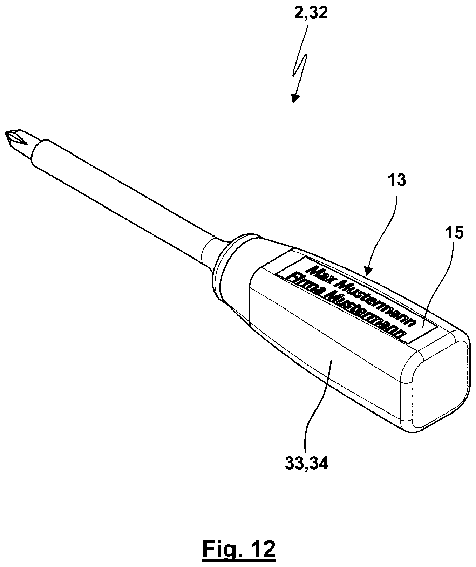

Schließlich zeigt **Fig. 12** eine Ausgestaltung des Handwerkzeugs 2 als Schraubendreher 32. Hier ist die Anzeigeeinrichtung 11 in einen Griff 33 des Schraubendrehers 32 eingebettet, was für das dargestellte Ausführungsbeispiel im Bereich der Mantelfläche, die eine Betätigungsfläche 34 bildet, erfolgt. Eine Anzeigefläche 15 der Anzeigeeinrichtung 13 erstreckt sich hier in Längsrichtung im Bereich der Mantelfläche des Griffes 33.

Ein Einsatz der erfindungsgemäßen Anzeigeeinrichtung 13 für ein Handwerkzeug 1 soll nicht auf die hier dargestellten Ausführungsformen von Handwerkzeugen 1 beschränkt sein. Vielmehr kann ein Einsatz der Erfindung für ein beliebiges Handwerkzeug erfolgen. Insbesondere handelt es sich hierbei um ein Handwerkzeug, wie dieses aktuell von der Anmelderin vertrieben wird, vgl. auch den aktuellen Katalog "Werkzeuge für die professionelle Anwendung" der Anmelderin.

### BEZUGSZEICHENLISTE

- 1: Zange
- 2: Handwerkzeug
- 3: Handhebel
- 4: Handhebel
- 5: Schwenkebene
- 6: Griff
- 7: Griff
- 8: Antriebskinematik
- 9: Zangenbacke
- 10: Zangenbacke
- 11: Zangenkopf
- 12: Zangenkopfebene
- 13: Anzeigeeinrichtung
- 14: Anzeige
- 15: Anzeigefläche
- 16: Handwerkzeug-Kennzeichnung
- 17: Verdickung
- 18: Strebe
- 19: Abdeckung
- 20: elektronisches Papier
- 21: Steuereinheit
- 22: Anschluss
- 23: elektrisches Kabel
- 24: elektrisches Kabel
- 25: Stirnfläche
- 26: Stirnfläche
- 27: Deckplatte
- 28: Deckplatte
- 29: Zwischenraum
- 30: Presszange
- 31: Schneidzange
- 32: Schraubendreher
- 33: Griff
- 34: Betätigungsfläche
- 35: Ausnehmung, Bohrung

## Patentansprüche

1. Manuell betätigtes Handwerkzeug (2), **dadurch gekennzeichnet, dass** eine elektrisch veränderbare Anzeigeeinrichtung (13) vorhanden ist, über welche eine elektrisch veränderbare Handwerkzeug-Kennzeichnung (16) dauerhaft ohne elektrische Beaufschlagung anzeigbar ist.

2. Handwerkzeug (2) nach Anspruch 1, **dadurch gekennzeichnet, dass** die Handwerkzeug-Kennzeichnung (16)
a) ein Benutzername,
b) eine das Handwerkzeug (2) individualisierende Ziffernfolge und/oder
c) eine Grafik oder ein Logo
ist.

3. Handwerkzeug (2) nach einem der vorhergehenden Ansprüche, **dadurch gekennzeichnet, dass** die Anzeigeeinrichtung (3) im Bereich einer manuellen Betätigungsfläche (34) des Handwerkzeugs (2) angeordnet ist.

4. Handwerkzeug (2) nach einem der vorhergehenden Ansprüche, **dadurch gekennzeichnet, dass** das Handwerkzeug (2) ein Schraubendreher (32) ist.

5. Handwerkzeug (2) nach einem der Ansprüche 1 bis 3, **dadurch gekennzeichnet, dass** das Handwerkzeug (2) eine Zange (1) mit zwei relativ zueinander verschwenkbaren Handhebeln (3, 4) ist.

6. Handwerkzeug (2) nach Anspruch 5, **dadurch gekennzeichnet, dass** die Anzeigeeinrichtung (13) im Bereich
a) eines Handhebels (3; 4) oder
b) eines Zangenkopfes (11)
angeordnet ist.

7. Handwerkzeug (2) nach Anspruch 5 oder 6, **dadurch gekennzeichnet, dass**
a) eine Steuereinheit (21),
b) ein elektrisches Kabel (23; 24) und/oder
c) ein Anschluss (22)
in einen Handhebel (3, 4) integriert sind/ist.

8. Handwerkzeug (2) nach Anspruch 7, **dadurch gekennzeichnet, dass**
a) die Steuereinheit (21),
b) das elektrische Kabel (23; 24) und/oder
c) der Anschluss
zwischen zwei metallischen Streben (18) eines Handhebels (3; 4) angeordnet sind/ist.

9. Handwerkzeug (2) nach einem der vorhergehenden Ansprüche, **dadurch gekennzeichnet, dass** die Anzeigeeinrichtung (13) eine Abdeckung (19) aufweist, welche die Anzeigeeinrichtung (13) gegenüber mechanischen Beanspruchungen schützt und/oder abdichtet.

10. Handwerkzeug (2) nach einem der vorhergehenden Ansprüche, **dadurch gekennzeichnet, dass** eine drahtlose Empfangseinrichtung
- für eine externe Energieversorgung und/oder
- für ein Steuersignal zur Erzeugung oder Veränderung einer Anzeige der Anzeigeeinrichtung (13)
vorhanden ist.

11. Handwerkzeug (2) nach einem der vorhergehenden Ansprüche, **dadurch gekennzeichnet, dass** eine Schnittstelle
- für eine kabelgebundene externe Energieversorgung und/oder
- für ein kabelgebundenes Steuersignal zur Erzeugung oder Veränderung einer Anzeige der Anzeigeeinrichtung (13)
vorhanden ist.

## Geänderte Patentansprüche

### Geänderte Patentansprüche gemäss Regel 137(2) EPÜ.

1. Manuell betätigtes Handwerkzeug (2), **dadurch gekennzeichnet, dass** eine elektrisch veränderbare Anzeigeeinrichtung (13) vorhanden ist, über welche eine elektrisch veränderbare Handwerkzeug-Kennzeichnung (16) dauerhaft ohne elektrische Beaufschlagung anzeigbar ist.

2. Handwerkzeug (2) nach Anspruch 1, **dadurch gekennzeichnet, dass** die Handwerkzeug-Kennzeichnung (16)
a) ein Benutzername,
b) eine das Handwerkzeug (2) individualisierende Ziffernfolge und/oder
c) eine Grafik oder ein Logo
ist.

3. Handwerkzeug (2) nach einem der vorhergehenden Ansprüche, **dadurch gekennzeichnet, dass** die Anzeigeeinrichtung (3) im Bereich einer manuellen Betätigungsfläche (34) des Handwerkzeugs (2) angeordnet ist.

4. Handwerkzeug (2) nach einem der vorhergehenden Ansprüche, **dadurch gekennzeichnet, dass** das Handwerkzeug (2) ein Schraubendreher (32) ist.

5. Handwerkzeug (2) nach einem der Ansprüche 1 bis 3, **dadurch gekennzeichnet, dass** das Handwerkzeug (2) eine Zange (1) mit zwei relativ zueinander verschwenkbaren Handhebeln (3, 4) ist.

6. Handwerkzeug (2) nach Anspruch 5, **dadurch gekennzeichnet, dass** die Anzeigeeinrichtung (13) im Bereich
a) eines Handhebels (3; 4) oder
b) eines Zangenkopfes (11)
angeordnet ist.

7. Handwerkzeug (2) nach Anspruch 5 oder 6, **dadurch gekennzeichnet, dass**
a) eine Steuereinheit (21),
b) ein elektrisches Kabel (23; 24) und/oder
c) ein Anschluss (22)
in einen Handhebel (3, 4) integriert sind/ist.

8. Handwerkzeug (2) nach Anspruch 7, **dadurch gekennzeichnet, dass**
a) die Steuereinheit (21),
b) das elektrische Kabel (23; 24) und/oder
c) der Anschluss
zwischen zwei metallischen Streben (18) eines Handhebels (3; 4) angeordnet sind/ist.

9. Handwerkzeug (2) nach einem der vorhergehenden Ansprüche, **dadurch gekennzeichnet, dass** die Anzeigeeinrichtung (13) eine Abdeckung (19) aufweist, welche die Anzeigeeinrichtung (13) gegenüber mechanischen Beanspruchungen schützt und/oder abdichtet.

10. Handwerkzeug (2) nach einem der vorhergehenden Ansprüche, **dadurch gekennzeichnet, dass** eine drahtlose Empfangseinrichtung
- für eine externe Energieversorgung und/oder
- für ein Steuersignal zur Erzeugung oder Veränderung einer Anzeige der Anzeigeeinrichtung (13)
vorhanden ist.

11. Handwerkzeug (2) nach einem der vorhergehenden Ansprüche, **dadurch gekennzeichnet, dass** eine Schnittstelle
- für eine kabelgebundene externe Energieversorgung und/oder
- für ein kabelgebundenes Steuersignal zur Erzeugung oder Veränderung einer Anzeige der Anzeigeeinrichtung (13)
vorhanden ist.
